# EUROPÄISCHE PATENTSCHRIFT

(11) **EP 0 412 307 B1**
(45) Veröffentlichungstag und Bekanntmachung des Hinweises auf die Patenterteilung: **28.09.1994**
(21) Anmeldenummer: 90113318.1
(22) Anmeldetag: 12.07.1990
(51) Int. Cl.: B60N 2/48

(54) **Kopfstütze für Fahrzeugsitze sowie Verfahren zu ihrer Herstellung**
Head rest for vehicle seats and method of making them
Appui-tête pour sièges de véhicule et méthode pour sa fabrication

(30) Priorität: 09.08.1989 DE 3926248
(43) Veröffentlichungstag der Anmeldung: 13.02.1991
(73) Patentinhaber: Adam Opel Aktiengesellschaft, 65428 Rüsselsheim (DE); General Motors Espana, S.A., Figueruelas (Zaragoza) (ES)
(72) Erfinder: Quistorf, Dieter, Dipl.-Ing., D-6085 Nauheim (DE); Garmendia,J.Eugenio ,Dipl.-Ing., Zaragoza (ES)
(74) Vertreter: Bergerin, Ralf, Dipl.-Ing.

(56) Entgegenhaltungen:
- EP-A- 0 254 808
- EP-A- 0 283 863
- DE-A- 2 648 952
- DE-A- 3 200 321
- DE-B- 2 405 774
- FR-A- 2 623 437

## Beschreibung

Die Erfindung betrifft eine Kopfstütze für Fahrzeugsitze mit den Merkmalen des Oberbegriffs des Anspruches 1 sowie ein Verfahren zur Herstellung einer solchen Kopfstütze.

Eine Kopfstütze der genannten Gattung ist beispielsweise in der EP-A-0 283 863 beschrieben. Diese Kopfstütze besteht im wesentlichen aus einem mehrteiligen schwenkbaren Rahmenkörper, der sich aus zwei Quertraversen, einer oberen und einer unteren, sowie zwei hohlen Seitenschenkeln zusammensetzt. Nachteilig dabei ist, daß die hohlen Seitenschenkel bei der Montage des Rahmenkörpers einerseits mit der oberen Quertraverse und andererseits mit der unteren Quertraverse verbunden werden müssen, wobei die untere Quertraverse erst nach dem Einstecken der Tragstangen montiert werden kann. Weiterhin ist es bei dieser Konstruktion nachteilig, daß der Schwenkbereich der Kopfstütze von der Höhenstellung auf den Tragstangen 6 abhängt, so daß beispielsweise die Kopfstütze im eingeschobenen Zustand nur minimal geschwenkt werden kann.

Die FR-A-2 623 437 zeigt eine Kopfstütze, bei der die miteinander (oben) verbundenen Tragstangen und eine untere Querverbindung den Rahmenkörper bilden. Bei dieser Kopfstütze kann jedoch der Rahmenkörper nicht gegenüber den Tragstangen geschwenkt werden. Um eine derartige Kopfstütze schwenkbar zu gestalten muß der Schwenkmechanismus in der Rückenlehne untergebracht werden.

Eine weitere Kopfstütze dieser Art ist aus der DE-OS 38 17 147 bekannt. Bei ihr hat die Verkleidungshülle über die gesamte Länge ihrer Unterseite eine Naht, durch die der geschlossene Rahmen in die Verkleidungshülle eingeschoben werden kann. Das Schließen der relativ langen Naht bedingt unerwünscht großen Arbeitsaufwand. Hinzu kommt, daß eine solche Naht meist als unschön empfunden wird.

Es ist Aufgabe der Erfindung, eine Kopfstütze der eingangs genannten Art zu schaffen, die die beschriebenen Nachteile des Standes der Technik beseitigt, in jeder Lage einen komfortablen Schwenkbereich aufweist und in einfacher Bauweise mit verringertem Herstellungsaufwand ausgebildet ist. Weiterhin soll ein Verfahren zur Herstellung einer solchen Kopfstütze gefunden werden.

Die erstgenannte Aufgabe wird dadurch gelöst, daß die Schenkel des U-förmigen Tragkörpers jeweils eine nach unten hin offene Aufnahme zum Einschieben jeweils eines Endes der Querstrebe aufweisen, wobei an der Aufnahme und/oder an den Enden der Querstrebe Verrastungsmittel zum Halten der eingesetzten Querstrebe angeordnet sind.

Durch diese Gestaltung wird es möglich, den U-förmigen Tragkörper zunächst ohne Querstrebe in die Verkleidungshülle einzuschieben. Das ist durch einen Einfädelvorgang möglich. Deshalb braucht die Öffnung in der Verkleidungshülle nur so groß zu sein wie der Querschnitt des Tragkörpers. Die Querstrebe kann anschließend durch die gleiche Öffnung eingefügt und mit den Schenkeln des Tragkörpers verbunden werden, so daß erst in der Verkleidungshülle der geschlossene Rahmen entsteht. Ein unbeabsichtigtes Lösen der Querstrebe vom Tragkörper ist dabei durch die Verrastungsmittel ausgeschlossen. Dank dieser erfindungsgemäßen Gestaltung genügt in der Unterseite der Verkleidungshülle eine sehr kleine Öffnung, wodurch das Aussehen der Kopfstütze gegenüber der bekannten Kopfstütze verbessert wird.

Üblicherweise sind Kopfstützen relativ zu ihren Haltestangen begrenzt schwenkbar ausgebildet. Das kann gemäß einer besonders vorteilhaften Ausgestaltung der Erfindung dadurch erreicht werden, daß die Haltestangen innerhalb des U-förmigen Tragkörpers jeweils in einem Schwenkkörper gehalten sind und daß dieser Schwenkkörper jeweils schwenkbar in einem Lager angeordnet ist, welches aus zwei durch ein Filmscharnier miteinander verbundenen, im montierten Zustand aufeinandergeklappten Lagerschalen besteht.

Die Ausbildung eines Lagers durch zwei mittels eines Filmscharniers miteinander verbundene Lagerschalen ist zwar bei Kopfstützen an sich bekannt, wie das die DE-AS 24 05 774 zeigt, jedoch bildet bei dieser Ausführung ein horizontales Verbindungsstück der Tragstangen die Schwenkachse der Kopfstütze. Die Lagerschalen brauchen deshalb nur über dieses Verbindungsstück zu greifen.

Besonders einfach sind die Schwenkkörper gestaltet, wenn sie jeweils durch eine zylindrische Scheibe mit einer radialen Bohrung zur Aufnahme einer Tragstange gebildet sind.

Die Kopfstütze ist besonders stabil und abknicksicher gehalten, wenn gemäß einer anderen Ausgestaltung der Erfindung die Tragstangen durch die Schwenkkörper hindurchgeführt sind und oberhalb der Schwenkkörper jeweils in einen im Querschnitt sektorförmigen Raum des U-förmigen Tragkörpers ragen.

Eine Höhenverstellung der Kopfstützen ist durch mehr oder minder weites Ausfahren der Tragstangen aus der Kopfstütze möglich, wenn die Tragstangen verschieblich in dem jeweiligen Schwenkkörper gehalten sind.

Der U-förmige Tragkörper kann zusammen mit den Lagern als ein einziges, kostengünstig herstellbares Spritzgußteil gestaltet sein, wenn die Lager einstückig mit dem U-förmigen Tragkörper ausgebildet sind.

Die Kopfstütze hat ein besonders vorteilhaftes Aussehen, wenn die Verkleidungshülle zum Einfädeln des U-förmigen Tragkörpers und der Querstrebe lediglich eine dem Querschnitt des Tragkörpers entsprechende, vor dem Ausschäumen zu verschließende Öffnung aufweist.

Die zweitgenannte Aufgabe, nämlich die Schaffung eines Verfahrens zur Herstellung einer Kopfstütze der vorstehenden Art, wird erfindungsgemäß dadurch gelöst, daß durch eine Öffnung der Verkleidungshülle zunächst ein U-förmiger Tragkörper eingefädelt, dann eine Querstrebe eingeschoben und mit den Schenkeln des Tragkörpers verrastet wird und daß anschließend der Hohlraum zwischen dem Tragkörper und der Querstrebe einerseits und der Verkleidungshülle andererseits ausgeschäumt wird.

Ein solches Verfahren ist sehr einfach und deshalb kostengünstig auszuführen und ergibt eine Kopfstütze, welche an ihrer Unterseite lediglich eine sehr kleine Naht aufweisen muß, die die zum Einführen des noch nicht geschlossenen Rahmens erforderliche Öffnung verschließt.

Die Erfindung läßt zahlreiche Ausführungsformen zu. Zur weiteren Verdeutlichung ihres Grundprinzips ist eine davon in der Zeichnung dargestellt und wird nachfolgend beschrieben. In ihr zeigen die
- Fig. 1: eine Vorderansicht der Kopfstütze, halbseitig geschnitten und ohne Verkleidungshülle dargestellt,
- Fig. 2: einen Schnitt durch die Kopfstütze entlang der Linie II - II in Figur 1,
- Fig. 3: einen horizontalen Teilschnitt durch die Kopfstütze entlang der Linie III - III in Figur 1,
- Fig. 4: einen senkrechten Schnitt durch die Kopfstütze entlang der Linie IV - IV in Figur 1,
- Fig. 5: eine Seitenansicht der Kopfstütze ohne Verkleidungshülle.

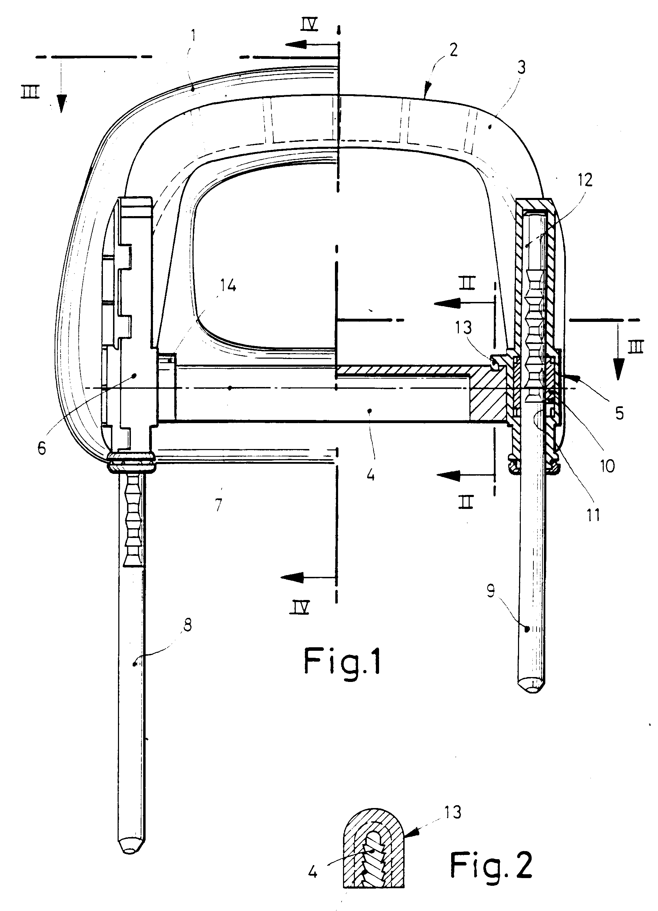

Die in Figur 1 als Ganzes dargestellte Kopfstütze hat innerhalb einer im linken Bildteil gezeigten Verkleidungshülle 1 einen geschlossenen Rahmen 2. Dieser besteht im wesentlichen aus einem U-förmig verlaufenden Tragkörper 3, dessen Schenkel durch eine lösbare Querstrebe 4 miteinander verbunden sind. In beiden Schenkeln des Tragkörpers 3 ist jeweils ein Lager 5, 6 vorgesehen, welches es der Kopfstütze gestattet, begrenzt um eine horizontal verlaufende Achse 7 verschwenkt zu werden. Zum besseren Verständnis der Erfindung wurden im linken Bildteil die Einbauteile sichtbar dargestellt, obgleich sie natürlich von der Verkleidungshülle verdeckt sind.

Nach unten hin ragen aus den Schenkeln des Tragkörpers 3 zwei Haltestangen 8, 9, welche höhenverschieblich im Tragkörper 3 gehalten sind. Im rechten Teil der Figur 1 ist zu sehen, daß das Lager 5 einen Schwenkkörper 10 in Form einer zylindrischen Scheibe hat. Dieser Schwenkkörper 10 ist um die Achse 7 drehbar im Lager 5 gehalten und hat eine durchgehende Bohrung 11, durch die die Haltestange 9 gesteckt und mittels einer im Schwenkkörper angeordneten (nicht dargestellten) Bügelfeder in jeweils eingestellter Höhenlage verrastbar ist. Oberhalb der Lager 5, 6 ist in dem Tragkörper 3 jeweils ein sektorförmiger Raum 12 vorgesehen, in den die jeweilige Haltestange 8, 9 mehr oder minder weit ragt und der die maximal mögliche Verschwenkbarkeit der Kopfstütze relativ zu den Haltestangen 8, 9 begrenzt.

An den einander zugewandten Seiten der Schenkel des Tragkörpers 3 ist jeweils eine nach unten hin offene Aufnahme 13, 14 angeformt, in die die Querstrebe 4 mit ihren Enden von unten her eingeschoben ist. Die Schnittdarstellung gemäß Figur 2 läßt die Gestaltung der Aufnahme 13 genauer erkennen. Man sieht, daß die Aufnahme 13 nach unten hin offen ist und das flache Ende der Querstrebe 4 aufzunehmen vermag. Die Querstrebe 4 und die Aufnahmen 13, 14 weisen Verrastungsmittel 15 auf, durch die die Querstrebe 4 nach ihrem Einschieben in die Aufnahmen 13, 14 dort sicher gehalten ist.

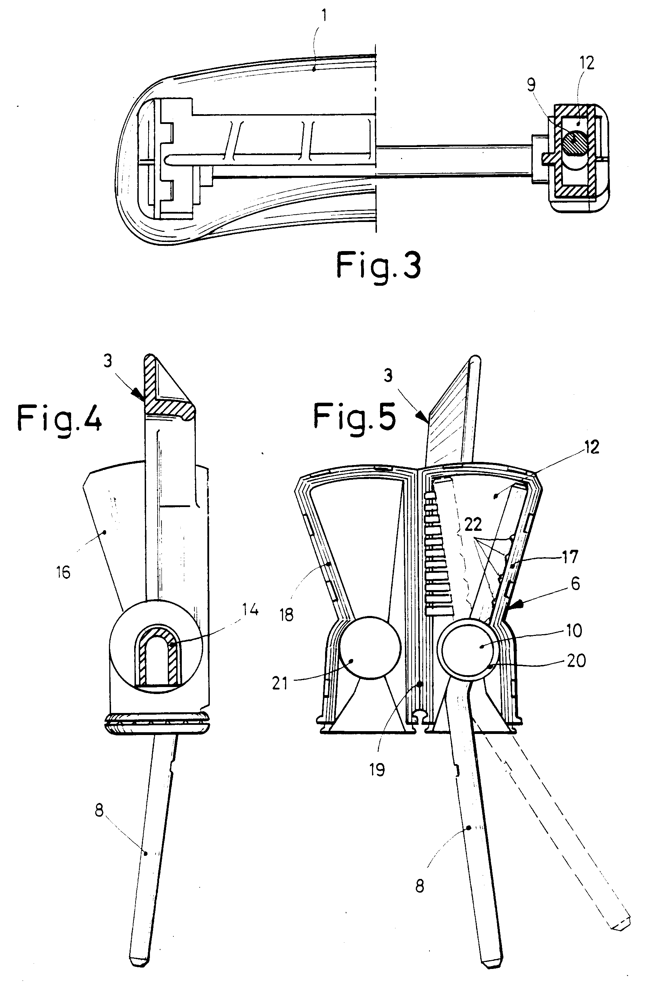

Die Schnittdarstellung gemäß Figur 3 zeigt deutlich die in den sektorförmigen Raum 12 ragende Haltestange 9 und läßt dadurch erkennen, wie die Verschwenkbarkeit der Kopfstütze begrenzt ist. Im linken Teil der Figur 3 ist wiederum die Verkleidungshülle 1 gezeigt. Dennoch wurden dort die Einbauteile als sichtbar dargestellt.

In Figur 4 ist die Aufnahme 14 geschnitten zu erkennen. Nach unten hin ragt aus dem Tragkörper 3 die Haltestange 8. Da der in den Figuren 1 und 3 geschnitten dargestellte Raum 12 sektorförmig ist, muß er über die Kontur des Tragkörpers 3 hinausragen, um eine ausreichende Verschwenkbarkeit der Kopfstütze sicherzustellen. In Figur 4 ist ein entsprechender, sektorförmiger Überstand 16 zu erkennen, in dem sich dieser Raum 12 befindet.

Die Seitenansicht gemäß Figur 5 zeigt, daß das Lager 6 aus zwei aufgeklappt dargestellten Lagerschalen 17, 18 besteht, die durch ein Filmscharnier 19 miteinander verbunden sind. In den Lagerschalen 17, 18 ist jeweils eine Zylinderschale 20, 21 geformt. In die rechte Zylinderschale ist der Schwenkkörper 10 eingelegt, durch den die Haltestange 8 höhenverstellbar und höhenlageverrastbar geführt ist, welche in den sektorförmigen Raum 12 ragt. Klappt man die Lagerschale 18 auf die Lagerschale 17, dann greift die Zylinderschale 21 über den nicht in der Zylinderschale 20 sitzenden Bereich des Schwenkkörpers 10 und hält diesen somit fest.

Die Figur 5 läßt des weiteren erkennen, daß im oberen Bereich der Haltestange 8 Kerben 22 vorgesehen sind, die im Zusammenwirken mit der nicht dargestellten Bügelfeder ein unbeabsichtigtes Verrutschen der Kopfstütze auf der Haltestange 8 verhindern.

Bei der Herstellung der Kopfstütze fädelt man den noch nicht mit der Querstrebe 4 versehenen Tragkörper 3 durch eine kleine Öffnung in die Verkleidungshülle 1 ein. Dann schiebt man die Querstrebe 4 durch dieselbe Öffnung und verrastet sie mit den Schenkeln des Tragkörpers 3. Ist das geschehen, so kann man die Verkleidungshülle 1 ausschäumen, so daß sie die notwendige Polsterung erhält und die Verkleidungshülle prall wird.

## Patentansprüche

1. Kopfstütze für Fahrzeugsitze, welche einen geschlossenen Rahmen hat, aus dem zwei zum Einschieben in eine Rückenlehne ausgebildete Haltestangen herausgeführt sind und der aus einem U-förmigen Tragkörper und einer seine Schenkel miteinander lösbar verbindenden Querstrebe besteht und von einer ausgeschäumten, schlauchartigen Verkleidungshülle derart umschlossen ist, daß ein zentraler Durchlaß verbleibt, wobei der geschlossene Rahmen gegenüber den Haltestangen um eine im wesentlichen horizontale, parallel zu der die Haltestangen enthaltenden Ebene verlaufende Schwenkachse begrenzt verschwenkbar ist, **dadurch gekennzeichnet**, daß die Schenkel des U-förmigen Tragkörpers (3) jeweils eine nach unten hin offene Aufnahme (13, 14) zum Einschieben jeweils eines Endes der Querstrebe (4) aufweisen, wobei an der Aufnahme (13, 14) und/oder an den Enden der Querstrebe (4) Verrastungsmittel (15) zum Halten der eingesetzten Querstrebe (4) angeordnet sind.

2. Kopfstütze nach Anspruch 1**, dadurch gekennzeichnet**, daß die Haltestangen (8, 9) innerhalb des U-förmigen Tragkörpers (3) jeweils in einem Schwenkkörper (10) gehalten sind und daß dieser Schwenkkörper (10) jeweils schwenkbar in einem Lager (5, 6) angeordnet ist, welches aus zwei durch ein Filmscharnier (19) miteinander verbundenen, im montierten Zustand aufeinandergeklappten Lagerschalen (17, 18) besteht.

3. Kopfstütze nach Anspruch 2, **dadurch gekennzeichnet**, daß die Schwenkkörper (10) jeweils durch eine zylindrische Scheibe mit einer radialen Bohrung (11) zur Aufnahme einer Haltestange (8, 9) gebildet sind.

4. Kopfstütze nach Anspruch 3, **dadurch gekennzeichnet**, daß die Haltestangen (8, 9) durch die Schwenkkörper (10) hindurchgeführt sind und oberhalb der Schwenkkörper (10) jeweils in einen im Querschnitt sektorförmigen Raum (12) des U-förmigen Tragkörpers (3) ragen.

5. Kopfstütze nach Anspruch 4, **dadurch gekennzeichnet**, daß die Haltestangen (8, 9) verschieblich in dem jeweiligen Schwenkkörper (10) gehalten sind.

6. Kopfstütze nach zumindest einem der vorangehenden Ansprüche, **dadurch gekennzeichnet**, daß die Lager (5, 6) einstückig mit dem U-förmigen Tragkörper (3) ausgebildet sind.

7. Kopfstütze nach zumindest einem der vorangehenden Ansprüche, **dadurch gekennzeichnet**, daß die Verkleidungshülle (1) zum Einfädeln des U-förmigen Tragkörpers (3) und der Querstrebe (4) lediglich eine dem Querschnitt des Tragkörpers (3) entsprechende, vor dem Ausschäumen zu verschließende Öffnung aufweist.

8. Verfahren zu Herstellung einer Kopfstütze nach zumindest einem der vorangehenden Ansprüche, **dadurch gekennzeichnet**, daß durch eine Öffnung der Verkleidungshülle zunächst ein U-förmiger Tragkörper eingefädelt, dann eine Querstrebe eingeschoben und mit den Schenkeln des Tragkörpers verrastet wird und daß anschließend der Hohlraum zwischen dem Tragkörper und der Querstrebe einerseits und der Verkleidungshülle andererseits ausgeschäumt wird.

## Claims

1. Head rest for vehicle seats, which has a closed frame from which project two holding bars designed for sliding into a back rest and which consists of a U-shaped support body and transverse strut for releasably connecting together its arms and which is enclosed by a foamed, tubular trim cover in such a way that a central opening remains, wherein the closed frame pivots in a limited way about an essentially horizontal swivel axis running parallel to the plane containing the holding bars, **characterised** in that the arms of the U-shaped support body (3) have a receptacle (13, 14) respectively, open towards the bottom, for inserting in each case one end of the transverse strut (4), wherein the receptacle (13, 14) and/or the ends of the transverse strut (4) are provided with locking means (15) for retaining the inserted transverse strut (4).

2. Head rest according to claim 1, **characterised** in that the holding bars (8, 9) within the U-shaped support body (3) are in each case held in a swivel body (10) and that this swivel body (10) is pivotally arranged in a bearing (5, 6), respectively, which consists of two bearing shells (17, 18) connected to each other by a film hinge (19) which in the assembled condition are folded on top of each other.

3. Head rest according to claim 2, **characterised** in that the swivel bodies (10) are in each case formed of a cylindrical disc with a radial bore (11) for receiving a holding bar (8, 9).

4. Head rest according to claim 3, **characterised** in that the holding bars (8, 9) penetrate the swivel body (10) and above the swivel body (10) project in each case into a chamber (12), sector-shaped in cross-section, of the U-shaped support body (3).

5. Head rest according to claim 4, **characterised** in that the holding bars (8, 9) are displaceably held in the respective swivel body (10).

6. Head rest according to at least one of the preceding claims, **characterised** in that the bearings (5, 6) are constructed in one piece with the U-shaped support body (3).

7. Head rest according to at least one of the preceding claims, **characterised** in that for mounting the U-shaped support body (3) and the transverse strut (4) the trim cover (1) has an opening, to be closed prior to foaming, corresponding to the diameter of the support body (3) only.

8. Method for manufacturing a head rest according to at least one of the preceding claims, **characterised** in that through an opening in the trim cover a U-shaped support body is mounted first, a transverse strut is inserted next and locked together with the arms of the support body, and subsequently foam is produced in the hollow chamber between the support body and the transverse strut on the one hand and the trim cover on the other hand.

## Revendications

1. Appui-tête pour siège de véhicule comportant un cadre fermé duquel sortent deux tiges-supports agencées de manière à pénétrer dans un dossier de siège et qui se compose d'un élément-support en forme de U et d'une entretoise qui relie entre elles de manière démontable ses deux branches et est entouré d'une enveloppe d'habillage en forme de tuyau souple rempli de mousse de manière telle qu'il subsiste un passage central, le cadre fermé pouvant pivoter de manière limitée par rapport aux tiges-supports autour d'un axe sensiblement horizontal qui s'étend parallèlement au plan contenant les tige-supports, caractérisé par le fait les branches de l'élément-support en forme de U présentent chacune un logement (13, 14) ouvert vers le bas pour l'engagement respectivement d'une extrémité de l'entretoise (4), des moyens d'encliquetage (15) étant prévus au niveau du logement (13, 14) et/ou aux extrémités de l'entretoise (4) aux fins de tenir ladite entretoise (4) mise en place.

2. Appui-tête selon la revendication 1, caractérisé par le fait que les tiges-supports (8, 9) sont tenues chacune dans un élément pivotant (10) à l'intérieur de l'élément-support en forme de U (3) et que ledit élément pivotant (10) est monté pivotant dans un palier (5, 6) formé de deux demi-coquilles (17, 18) qui sont reliées entre elles par une charnière-film (19) et sont repliées l'une sur l'autre à l'état monté.

3. Appui-tête selon la revendication 2, caractérisé par le fait que les éléments pivotants (10) sont constitués chacun par un disque cylindrique pourvu d'un perçage radial (11) qui reçoit une tige-support (8, 9).

4. Appui-tête selon la revendication 3, caractérise par le fait que les tiges-supports (8, 9) traversent les éléments pivotants (10) et, au-dessus desdits éléments pivotants (10), font saillie chacune dans une chambre (12) à section sensiblement en secteur de cercle de l'élément-support (3).

5. Appui-tête selon la revendication 4, caractérisé par le fait que les tiges-supports (8, 9) sont tenues avec possibilité de déplacement en translation dans l'élément pivotant (10) correspondant.

6. Appui-tête selon l'une au moins des revendications précédentes, caractérisé par le fait que les paliers (5, 6) sont formés d'une pièce avec l'élément-support (3).

7. Appui-tête selon l'une au moins des revendications précédentes, caractérisé par le fait que pour permettre d'enfiler l'élément-support en forme de U (3) et l'entretoise (4), l'enveloppe d'habillage (1) comporte une ouverture unique dont la section correspond à celle de l'élément-support (3) et qui est fermée avant le remplissage avec de la mousse.

8. Procédé de fabrication d'un appui-tête conforme à l'une au moins des revendications précédentes, caractérisé par le fait que l'on enfile un élément-support en forme de U par une ouverture de l'enveloppe d'habillage, on glisse l'entretoise et on l'encliquète sur les branches de l'élément-support et qu'ensuite on remplit de mousse la cavité entre l'élément-support et l'entretoise d'une part et l'enveloppe d'habillage d'autre part.
